# EUROPÄISCHE PATENTANMELDUNG

(11) **EP 4 105 944 A1**
(43) Veröffentlichungstag der Anmeldung: **21.12.2022**
(21) Anmeldenummer: 21179496.1
(22) Anmeldetag: 15.06.2021
(51) Int. Cl.: G21K 1/02, G01V 5/00

(54) **LINEARBESCHLEUNIGERSYSTEM MIT EINEM VIELFACHKOLLIMATOR**

(71) Anmelder: Siemens Healthcare GmbH, 91052 Erlangen (DE)
(72) Erfinder: Müller, Sven, 99198 Urbich (DE); Cyliax, Benno, 07407 Rudolstadt (DE); Koschmieder, Martin, 07407 Uhlstädt-Kirchhasel (DE); Möller, Marvin, 07751 Jena (DE); Noak, Claudia, 07407 Uhlstädt-Kirchhasel (DE); Willing, Stefan, 07407 Rudolstadt (DE)

(57) **Zusammenfassung**

Die Erfindung betrifft ein Linearbeschleunigersystem, eine Durchleuchtungseinrichtung und eine mobile Plattform.

Das erfindungsgemäße Linearbeschleunigersystem für ein Erzeugen einer MeV-Röntgenstrahlung zur Werkstoffprüfung eines Objekts weist
- eine Elektronenquelle zur Emission von Elektronen,
- eine Beschleunigervorrichtung, welche die Elektronenquelle umgibt und stirnseitig ein Transmissionstarget zur Generierung der MeV-Röntgenstrahlung aufweist, und
- eine Hochfrequenzquelle zur Beschleunigung der Elektronen auf eine kinetische Energie im MeV-Bereich innerhalb der Beschleunigervorrichtung in Richtung des Transmissionstargets auf,
gekennzeichnet durch
- einen stirnseitig vor dem Objekt angeordneten Vielfachkollimator zur Kollimierung der generierten MeV-Röntgenstrahlung, welcher mehrere röntgenstrahlenabsorbierende Schichten aufweist, die zueinander röntgenstrahlendurchlässig beabstandet und im Wesentlichen parallel zur Propagationsrichtung der MeV-Röntgenstrahlung ausgerichtet sind.

## Beschreibung

Die Erfindung betrifft ein Linearbeschleunigersystem, eine Durchleuchtungseinrichtung und eine mobile Plattform.

Mega-Elektronen-Volt-Röntgenstrahlung ("MeV-Röntgenstrahlung") wird beispielsweise in einem Sicherheitsbereich oder in einer medizinischen Bildgebung oder in einer Therapieeinrichtung verwendet und üblicherweise mittels einem Linearbeschleunigersystem bereitgestellt. Aus Sicherheitsgründen muss die MeV-Röntgenstrahlung vor dem Eindringen in die das Linearbeschleunigersystem umgebende Umwelt abgeschwächt bzw. abgeschirmt werden. Da je nach Anwendungsfall die MeV-Röntgenstrahlung über größere Bereiche, beispielsweise bei der Durchleuchtung eines Containers, auf dem Röntgendetektor detektiert wird, weist die MeV-Röntgenstrahlung einen Fächerstrahl mit entsprechender Penumbra auf. Gemäß der Ausdehnung der Penumbra muss ein relativ großer Bereich abgeschirmt werden, was typischerweise eine hohe Masse an Schirmmaterial wie z.B. Blei in der Schirmeinrichtung erfordert, welche den Röntgendetektor umgibt und die nicht detektierte MeV-Röntgenstrahlung absorbiert.

Eine Möglichkeit, den abzuschirmenden Bereich und somit den Bedarf an Schirmmaterial zu verkleinern, ist die Verkleinerung der Penumbra. Dafür können herkömmliche Kollimatoren verwendet werden, welche eine entsprechend lange Kollimatortiefe aufweisen. Je länger die Kollimatortiefe ist, desto schmaler ist typischerweise die Penumbra und die Breite der Schirmeinrichtung kann desto kleiner sein. Lange herkömmliche Kollimatoren weisen allerdings ein für bestimmte Anwendungsfälle sich negativ auswirkendes Gewicht auf.

Alternativ oder zusätzlich kann die Kollimatorbreite des herkömmlichen Kollimators reduziert werden, wodurch die Penumbra ebenfalls schmaler wird. Ein Linearbeschleunigersystem mit einem sehr schmalen herkömmlichen Kollimator kann allerdings dadurch beeinträchtigt sein, dass Schwankungen der Elektronentrajektorie Schwankungen in der Röntgenstrahlendosis bewirken, wodurch insgesamt der Anteil an nutzbarer Röntgenstrahlendosis sinken kann.

Eine weitere Möglichkeit betrifft die Reduktion der geometrischen Ausdehnung des Brennflecks auf dem Transmissionstarget. Ein Dirac-Elektronenstrahl resultiert typischerweise bei einem solchen Target auf Wolfram-Basis in einem Brennfleck mit einer Ausdehnung von 0,6 bis 0,8 mm. Eine Reduktion der Dicke des Targets ist für die Verkleinerung der Ausdehnung denkbar, führt aber typischerweise dazu, dass mehr Elektronen das Target durchdringen und an anderer Stelle zu MeV-Streustrahlung führen, welche ebenfalls absorbiert werden muss. Ab einem gewissen Grad an Reduktion der Dicke muss gleichzeitig die Intensität des Elektronenstroms reduziert werden, weil das Transmissionstarget ansonsten durch die mittels des Elektronenstroms deponierte Leistung zerstört werden kann. Denn die im Transmissionstarget deponierte Leistungsdichte steigt mit 1/r^2 an, was die maximale Intensität des Elektronenstroms im Betrieb des Linearbeschleunigersystems begrenzt.

Der Erfindung liegt die Aufgabe zu Grunde, ein Linearbeschleunigersystem, eine Durchleuchtungseinrichtung und eine mobile Plattform anzugeben, bei welchen der Bedarf an Schirmmaterial in der Schirmeinrichtung reduziert ist.

Die Aufgabe wird durch die Merkmale der unabhängigen Ansprüche gelöst. Vorteilhafte Ausgestaltungen sind in den Unteransprüchen beschrieben.

Das erfindungsgemäße Linearbeschleunigersystem für ein Erzeugen einer MeV-Röntgenstrahlung zur Werkstoffprüfung eines Objekts weist
- eine Elektronenquelle zur Emission von Elektronen,
- eine Beschleunigervorrichtung, welche die Elektronenquelle umgibt und stirnseitig ein Transmissionstarget zur Generierung der MeV-Röntgenstrahlung aufweist, und
- eine Hochfrequenzquelle zur Beschleunigung der Elektronen auf eine kinetische Energie im MeV-Bereich innerhalb der Beschleunigervorrichtung in Richtung des Transmissionstargets auf,
gekennzeichnet durch
- einen stirnseitig vor dem Objekt angeordneten Vielfachkollimator zur Kollimierung der generierten MeV-Röntgenstrahlung, welcher mehrere röntgenstrahlenabsorbierende Schichten aufweist, die zueinander röntgenstrahlendurchlässig beabstandet und im Wesentlichen parallel zur Propagationsrichtung der MeV-Röntgenstrahlung ausgerichtet sind.

Ein Vorteil des Linearbeschleunigersystems ist, dass die Penumbra vorteilhafterweise reduziert wird, wodurch die Masse an nötigem Schirmmaterial in der Schirmeinrichtung sinkt. Vorteilhafterweise kann die Dosisreduktion bei der nutzbaren Röntgenstrahlung um den Faktor 2 bis 3 dadurch kompensiert werden, dass die Anzahl der auf dem Transmissionstarget auftreffenden Elektronen erhöht wird, da die geometrische Ausdehnung des Brennflecks und somit die Leistungsdichte durch die Verwendung des Vielfachkollimators beibehalten werden kann.

Das Linearbeschleunigersystem ermöglicht das Beschleunigen der Elektronen entlang einer im Wesentlichen geraden Linie innerhalb der Beschleunigervorrichtung. Je nach Art des Linearbeschleunigersystems werden die Elektronen insbesondere mittels der Hochfrequenzquelle in der Beschleunigervorrichtung auf Energien über 1 MeV beschleunigt. Die kinetische Energie im MeV-Bereich der MeV-Röntgenstrahlung ist typischerweise einstellbar und kann bis zu 20 MeV betragen, bzw. im Bereich 3 bis 9 MeV liegen. Die kinetische Energie im MeV-Bereich kann auch als kinetische MeV-Energie bezeichnet sein.

Die Elektronen werden von der Elektronenquelle typischerweise gepulst in die vorzugsweise evakuierte Beschleunigervorrichtung emittiert. Die Beschleunigervorrichtung weist zumindest eine einzelne Linearbeschleunigerkavität, typischerweise mehrere Linearbeschleunigerkavitäten auf. Die Elektronen bilden einen Elektronenstrom mit einer Stromstärke von üblicherweise bis zu 1 A. Die Elektronenquelle emittiert die Elektronen in die Beschleunigervorrichtung typischerweise an einer dem Transmissionstarget gegenüberliegenden Seite. Die Elektronenquelle weist insbesondere einen thermionischen Emitter, beispielsweise einen Wendelemitter oder einen sphärischen Emitter, oder einen kalten Emitter, beispielsweise mit Kohlenstoffröhrchen oder Siliziumröhrchen auf. Die Elektronenquelle kann ein Gitter aufweisen zur Regulierung des Elektroneneinschusses.

Die Hochfrequenzquelle ist zur Beschleunigung der Elektronen innerhalb der Beschleunigervorrichtung ausgebildet und weist typischerweise dazu ein Magnetron oder ein Klystron auf. Die Hochfrequenzquelle kann zusätzlich eine Reflektionsphasenschiebervorrichtung zur schnellen Variation der Hochfrequenzleistung aufweisen.

Die MeV-Röntgenstrahlung wird typischerweise bei der Wechselwirkung der emittierten Elektronen beim Auftreffen auf dem Transmissionstarget als sogenannte Bremsstrahlung generiert. Das Transmissionstarget weist beispielsweise Wolfram und/oder Kupfer auf. Vorzugsweise ist das Transmissionstarget derart in der Beschleunigervorrichtung angeordnet, dass die beschleunigten Elektronen vorzugsweise vollständig auf dem Transmissionstarget auftreffen.

Nach oder bei der Generierung der MeV-Röntgenstrahlung tritt die Röntgenstrahlung aus der Beschleunigervorrichtung aus. Stirnseitig an die Beschleunigervorrichtung schließt vorzugsweise direkt der Vielfachkollimator an. Der Vielfachkollimator ist insbesondere fest mit der Beschleunigervorrichtung auf Höhe des Transmissionstargets verbunden. In jedem Fall ist der Vielfachkollimator derart eingerichtet, dass bei einer vorgesehenen Werkstoffprüfung des Objekts die Kollimierung der MeV-Röntgenstrahlung zeitlich und örtlich vor dem Durchleuchten des Objekts erfolgt.

Der Vielfachkollimator besteht insbesondere aus einem Fächerstrahlkollimator, in welchem ein Vielschichtkollimator eingesetzt ist. Röntgenstrahlenabsorbierende Schichten sind insbesondere zur zumindest partiellen Absorption der generierten MeV-Röntgenstrahlung ausgebildet. Röntgenstrahlenabsorbierend bedeutet insbesondere zumindest teilweise röntgenstrahlendicht. Der seitliche Rahmen des Vielfachkollimators kann aus einer röntgenstrahlenabsorbierenden Schicht gemäß den mehreren röntgenstrahlenabsorbierenden Schichten und/oder aus einem röntgenstrahlenabsorbierenden Material aufgebaut sein. Der seitliche Rahmen des Vielfachkollimators kann eine höhere Absorptionsrate aufweisen als eine röntgenstrahlenabsorbierende Schicht. Der Vielfachkollimator kann von einer zusätzlichen Schirmeinrichtung umgeben sein.

Eine röntgenstrahlendurchlässige beabstandete Anordnung bedeutet insbesondere, dass die röntgenstrahlenabsorbierenden Schichten derart ausgerichtet sind, dass die generierte MeV-Röntgenstrahlung zumindest teilweise die röntgenstrahlenabsorbierenden Schichten ohne Wechselwirkung, insbesondere ohne Absorption, passieren kann. Zwischen den röntgenstrahlenabsorbierenden Schichten befindet sich beispielsweise Luft.

Röntgenstrahlendurchlässig ist in Hinblick auf die Funktion vorzugsweise identisch wie röntgenstrahlentransparent. Der Begriff röntgenstrahlentransparent wird in Abgrenzung zu röntgenstrahlendurchlässig in Zusammenhang mit Materialien verwendet, die diese Eigenschaft zu einem bestimmten Grad aufweisen. Im Wesentlichen können die Begriffe röntgenstrahlentransparent und röntgenstrahlendurchlässig synonym verwendet werden.

Die mehreren röntgenstrahlenabsorbierenden Schichten sind im Wesentlichen parallel zur Propagationsrichtung der MeV-Röntgenstrahlung insbesondere für eine Optimierung der Röntgenstrahldurchlässigkeit ausgerichtet. In anderen Worten maximiert die im Wesentlichen parallele Ausrichtung den Anteil an MeV-Röntgenstrahlung, welcher den Vielfachkollimator passieren kann. Die Propagationsrichtung bezieht sich insbesondere auf den Zentralstrahl der MeV-Röntgenstrahlung. Die im Wesentlichen parallele Ausrichtung schließt eine vollständige parallele oder konische Ausrichtung mit ein. Grundsätzlich ist es denkbar, dass die Ausrichtung zweier benachbarter röntgenstrahlenabsorbierender Schichten relativ zur Propagationsrichtung variiert.

Die MeV-Röntgenstrahlung ist zur Verwendung bei der Werkstoffprüfung des Objekts vorgesehen. Die Werkstoffprüfung ist insbesondere eine zerstörungsfreie Werkstoffprüfung. Die Werkstoffprüfung kann bei einer Sicherheitskontrolle und/oder Zollkontrolle und/oder Werkstoffkontrolle erfolgen. In diesen Fällen ist das Objekt z.B. eine Ware und/oder ein mit Waren gefüllter Container. Grundsätzlich ist es denkbar, dass das erfindungsgemäße Linearbeschleunigersystem in einer medizinischen Bildgebung und/oder in einer Therapieeinrichtung eingesetzt wird. In diesem Fall ist das Objekt beispielsweise ein Patient.

Eine Ausführungsform sieht vor, dass der Vielfachkollimator zusätzlich mehrere röntgenstrahlentransparente Schichten aufweist, welche im Vielfachkollimator zwischen den röntgenstrahlenabsorbierenden Schichten derart angeordnet sind, dass sich die röntgenstrahlentransparenten Schichten und die röntgenstrahlenabsorbierenden Schichten abwechseln. Diese Ausführungsform ermöglicht insbesondere einen kompakten und stabilen Aufbau des Vielfachkollimators. Die mehreren röntgenstrahlentransparenten Schichten weisen ein röntgenstrahlentransparentes Material auf.

Eine Ausführungsform sieht vor, dass die röntgenstrahlentransparenten Schichten als röntgenstrahlentransparentes Material Kunststoff und/oder Silizium und/oder Aluminium aufweisen. Grundsätzlich sind alle Materialien möglich, welche die Röntgenstrahlen weniger stark absorbieren als das röntgenstrahlenabsorbierende Material. Es ist denkbar, dass die röntgenstrahlentransparenten Schichten aus dem röntgenstrahlentransparenten Material bestehen.

Eine Ausführungsform sieht vor, dass die röntgenstrahlenabsorbierenden Schichten als röntgenstrahlenabsorbierendes Material Wolfram und/oder Blei aufweisen. Es ist denkbar, dass die röntgenstrahlenabsorbierenden Schichten aus dem röntgenstrahlentransparenten Material bestehen.

Eine Ausführungsform sieht vor, dass eine Kollimatorbreite des Vielfachkollimators zwischen 0,1 und 20 mm, insbesondere zwischen 1 und 10 mm, vorzugsweise 3 mm beträgt. Die Kollimatorbreite bezieht sich insbesondere auf eine lichte Ausdehnung innerhalb des Vielfachkollimators senkrecht zur Propagationsrichtung.

Eine Ausführungsform sieht vor, dass eine Kollimatortiefe des Vielfachkollimators zwischen 1 und 100 cm, insbesondere zwischen 10 und 50 cm, vorzugsweise 25 cm beträgt. Die Kollimatortiefe bezieht sich insbesondere auf eine Länge des Vielfachkollimators parallel zur Propagationsrichtung.

Eine Ausführungsform sieht vor, dass ein Mittelpunktabstand zwischen den röntgenstrahlenabsorbierenden Schichten zwischen 0,01 und 1 mm, insbesondere 0,1 mm beträgt. Der Mittelpunktabstand ist definiert als der Abstand zwischen den Mittelpunkten zweier benachbarter röntgenstrahlenabsorbierender Schichten.

Eine Ausführungsform sieht vor, dass eine Dicke der röntgenstrahlenabsorbierenden Schichten zwischen 0,01 und 0,5 mm, insbesondere 0,025 mm beträgt. Die Dicke der röntgenstrahlenabsorbierenden Schichten bezieht sich auf die jeweilige Schichtdicke.

Eine Ausführungsform sieht vor, dass ein Verhältnis aus dem Mittelpunktabstand zwischen den röntgenstrahlenabsorbierenden Schichten über der Dicke der röntgenstrahlenabsorbierenden Schichten zwischen 0,1 und 50, insbesondere zwischen 1 und 20, vorzugsweise 4 beträgt.

Eine Ausführungsform sieht vor, dass die Dicke der röntgenstrahlenabsorbierenden Schichten variiert. Die Variation der Dicke bedeutet, dass zumindest zwei der röntgenstrahlenabsorbierenden Schichten eine unterschiedliche Schichtdicke aufweisen.

Eine Ausführungsform sieht vor, dass ein Mittelpunktabstand zwischen den röntgenstrahlenabsorbierenden Schichten variiert. Die Variation des Mittelpunktabstands bedeutet, dass in Bezug auf einen Abschnitt der Propagationsrichtungsachse zumindest zwei der röntgenstrahlenabsorbierenden Schichten einen unterschiedlichen Abstand aufweisen.

Eine Ausführungsform sieht vor, dass die röntgenstrahlenabsorbierenden Schichten zur Fokussierung der MeV-Röntgenstrahlung konisch ausgerichtet sind. Die konische Ausrichtung ist eine Art der im Wesentlichen parallelen Ausrichtung.

Eine erfindungsgemäße Durchleuchtungseinrichtung weist das Linearbeschleunigersystem und einen Röntgendetektor auf, welcher zumindest eine Detektorzeile mit einer Länge größer 1 m, insbesondere größer 3 m, beispielsweise von 5 m aufweist.

Der Einsatz des erfindungsgemäßen Linearbeschleunigersystems in der Durchleuchtungseinrichtung ist insbesondere daher vorteilhaft, weil insbesondere bei Einrichtungen mit derart großen Detektorzeilen entsprechend viel Masse an Schirmmaterial in der detektorseitigen Schirmeinrichtung eingespart werden kann. Die Einsparung ermöglicht einen insgesamt wesentlich leichteren und kleineren Aufbau der Durchleuchtungseinrichtung, was üblicherweise mit einem Kostenvorteil einhergeht. Das erfindungsgemäße Linearbeschleunigersystem ermöglicht also insbesondere die Werkstoffprüfung von relativ großen Objekten, wie z.B. einem handelsüblichen Schiff- oder Sattelauflieger-Container, mit entsprechend hoher Dosis, weil die Brennfleckgröße (und somit die Leistungsdichte) unverändert bleibt. Die Durchleuchtungseinrichtung ist also für die Werkstoffprüfung des Objekts ausgebildet.

Der Röntgendetektor kann mehrere Detektorzeilen nebeneinander aufweisen, welche dieselbe oder eine unterschiedliche Länge aufweisen. Es ist denkbar, dass die zumindest eine Detektorzeile eine Länge zwischen 1 bis 10 m, insbesondere zwischen 3 und 7 m aufweist. Die zumindest eine Detektorzeile kann aus mehreren geraden Detektorzeilenelementen aufgebaut sein und/oder einen Knick mit einem Winkel von im Wesentlichen 90° aufweisen. Eine Breite der zumindest einen Röntgendetektorzeile beträgt insbesondere 0,01 bis 10 cm, beispielsweise 0,5 bis 2 cm.

Eine erfindungsgemäße mobile Plattform weist ein Fahrgestell und die Durchleuchtungseinrichtung auf, wobei das Linearbeschleunigersystem auf dem Fahrgestell angeordnet ist und der Röntgendetektor in einem Abstand größer 3 m vom Transmissionstarget an einem Trägerarm angeordnet und an dem Fahrgestell mittels des Trägerarms befestigt. Der Einsatz des erfindungsgemäßen Linearbeschleunigersystems ist insbesondere vorteilhaft, weil durch die Reduktion an Schirmmaterial das Fahrgestell der mobilen Plattform konstruktiv einfacher ausgestaltet werden kann. Die mobile Plattform ermöglicht weiterhin das Bewegen der Durchleuchtungseinrichtung z.B. an den Ort der Werkstoffprüfung, beispielsweise einen Hafen und/oder Flughafen. Die mobile Plattform ist also für die Werkstoffprüfung des Objekts ausgebildet.

Die Ausgestaltung mit dem Trägerarm ermöglicht, dass das vergleichsweise große Objekt zwischen dem Transmissionstarget und Röntgendetektor für die Werkstoffprüfung angeordnet, insbesondere abgestellt werden kann. Alternativ ist es denkbar, dass das zu prüfende Objekt durch den Untersuchungsraum zwischen dem Transmissionstarget und dem Röntgendetektor hindurch für die Werkstoffprüfung bewegt wird. Die mobile Plattform weist im Betrieb typischerweise einen nach unten offenen u-förmigen Untersuchungsraum auf.

Für eine ausgewogene Gewichtsverteilung und einen somit vorzugsweise auch im Betrieb frei schwebenden Trägerarm ist üblicherweise das Linearbeschleunigersystem auf dem Fahrgestell selbst angeordnet, während der relativ zum Linearbeschleunigersystem leichte Röntgendetektor an dem Arm befestigt ist. Grundsätzlich ist auch eine umgekehrte Anordnung denkbar. Der Trägerarm kann zumindest ein Drehgelenk aufweisen und/oder in seiner Länge veränderbar sein. Der Trägerarm weist typischerweise ein Befestigungsmittel auf, mit welchem der Röntgendetektor an dem Trägerarm vorzugsweise lösbar befestigt ist.

Eine Ausführungsform sieht vor, dass die mobile Plattform als Lastkraftwagen ausgebildet ist. Diese Ausführungsform ermöglicht vorteilhafterweise das eigenständige und kostengünstige Bewegen der Durchleuchtungseinrichtung über große Distanzen im km-Bereich.

Bei der Beschreibung der Vorrichtung erwähnte Merkmale, Vorteile oder alternative Ausführungsformen sind ebenso auf das Verfahren zu übertragen und umgekehrt. Mit anderen Worten können Ansprüche auf das Verfahren mit Merkmalen der Vorrichtung weitergebildet sein und umgekehrt. Insbesondere kann die erfindungsgemäße Vorrichtung in dem Verfahren verwendet werden.

Im Folgenden wird die Erfindung anhand der in den Figuren dargestellten Ausführungsbeispiele näher beschrieben und erläutert. Grundsätzlich werden in der folgenden Figurenbeschreibung im Wesentlichen gleich bleibende Strukturen und Einheiten mit demselben Bezugszeichen wie beim erstmaligen Auftreten der jeweiligen Struktur oder Einheit benannt.

Es zeigen:
Fig. 1 ein herkömmliches Linearbeschleunigersystem gemäß dem Stand der Technik,
Fig. 2 ein erfindungsgemäßes Linearbeschleunigersystem,
Fig. 3 einen Vielfachkollimator,
Fig. 4 eine Durchleuchtungseinrichtung,
Fig. 5 eine mobile Plattform und
Fig. 6 bis 11 Simulationen der Abhängigkeiten verschiedener Parameter des Vielfachkollimators im Linearbeschleunigersystem.

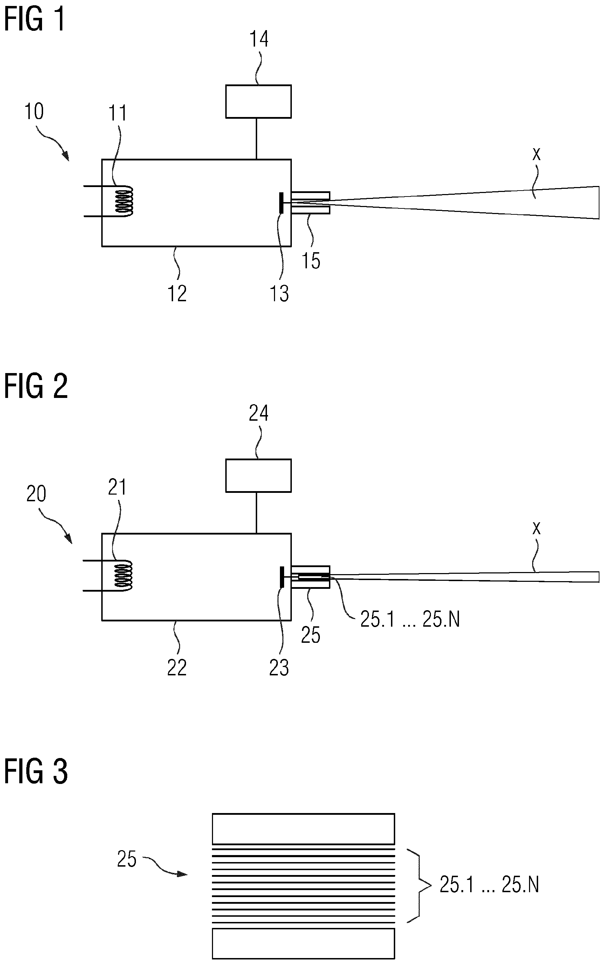

**Fig. 1** zeigt ein herkömmliches Linearbeschleunigersystem 10. Das herkömmliche Linearbeschleunigersystem 10 ist für ein Erzeugen einer MeV-Röntgenstrahlung X zur Werkstoffprüfung eines nicht gezeigten Objekts ausgebildet und weist eine Elektronenquelle 11 zur Emission von Elektronen, eine Beschleunigervorrichtung 12, welche die Elektronenquelle 11 umgibt und stirnseitig ein Transmissionstarget 13 zur Generierung der MeV-Röntgenstrahlung X aufweist, und eine Hochfrequenzquelle 14 zur Beschleunigung der Elektronen auf eine kinetische Energie im MeV-Bereich innerhalb der Beschleunigervorrichtung 12 in Richtung des Transmissionstargets 13 auf. Das herkömmliche Linearbeschleunigersystem 10 aus dem Stand der Technik weist einen herkömmlichen Fächerstrahlkollimator 15 zur Kollimierung der MeV-Röntgenstrahlung X mit einer vergleichsweise großen Penumbra auf.

**Fig. 2** zeigt ein Linearbeschleunigersystem 20 für ein Erzeugen einer MeV-Röntgenstrahlung X zur Werkstoffprüfung eines nicht in Fig. 2 gezeigten Objekts O. Das Linearbeschleunigersystem 20 weist eine Elektronenquelle 21 zur Emission von Elektronen, eine Beschleunigervorrichtung 22, welche die Elektronenquelle 21 umgibt und stirnseitig ein Transmissionstarget 23 zur Generierung der MeV-Röntgenstrahlung X aufweist, und eine Hochfrequenzquelle 24 zur Beschleunigung der Elektronen auf eine kinetische Energie im MeV-Bereich innerhalb der Beschleunigervorrichtung 22 in Richtung des Transmissionstargets 23 auf.

Zusätzlich weist das Linearbeschleunigersystem 20 einen stirnseitig vor dem Objekt O angeordneten Vielfachkollimator 25 zur Kollimierung der generierten MeV-Röntgenstrahlung X mit einer vergleichsweise kleinen Penumbra auf. Der Vielfachkollimator 25 weist mehrere röntgenstrahlenabsorbierende Schichten 25.1 ... 25.N auf, die zueinander röntgenstrahlendurchlässig beabstandet und im Wesentlichen parallel zur Propagationsrichtung der MeV-Röntgenstrahlung X ausgerichtet sind.

**Fig. 3** zeigt eine Detailansicht des Vielfachkollimators 25.

In diesem Ausführungsbeispiel sind die mehreren röntgenstrahlenabsorbierenden Schichten 25.1 ... 25.N vollständig parallel ausgerichtet. Alternativ können die röntgenstrahlenabsorbierenden Schichten 25.1.... 25.N zur Fokussierung der MeV-Röntgenstrahlung X konisch ausgerichtet sein.

Der Vielfachkollimator 25 kann zusätzlich nicht in Fig. 3 eingezeichnete mehrere röntgenstrahlentransparente Schichten aufweisen, welche im Vielfachkollimator 25 zwischen den röntgenstrahlenabsorbierenden Schichten 25.1 ... 25.N derart angeordnet sind, dass sich die röntgenstrahlentransparenten Schichten und die röntgenstrahlenabsorbierenden Schichten 25.1 ... 25.N abwechseln. Die röntgenstrahlenabsorbierenden Schichten 25.1 ... 25.N weisen als röntgenstrahlenabsorbierendes Material Wolfram und/oder Blei auf. Die röntgenstrahlentransparenten Schichten weisen als röntgenstrahlentransparentes Material Kunststoff und/oder Silizium und/oder Aluminium auf.

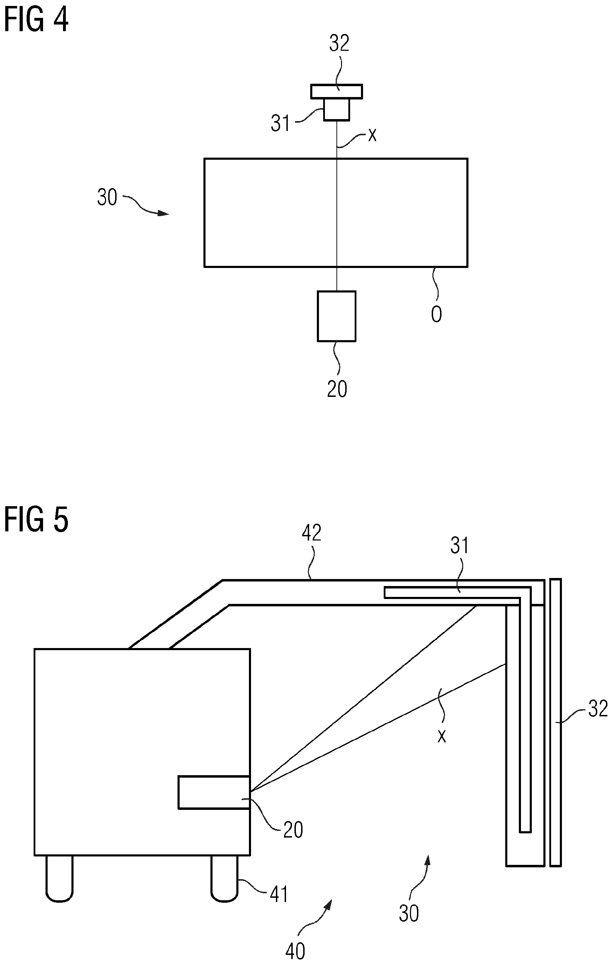

**Fig. 4** zeigt eine Durchleuchtungseinrichtung 30 aus einer Vogelperspektive. Die Durchleuchtungseinrichtung 30 weist das Linearbeschleunigersystem 20 und einen Röntgendetektor 31 auf, welcher zumindest eine Detektorzeile mit einer Länge größer 3 m aufweist. Die Durchleuchtungseinrichtung 30 weist zusätzlich eine detektorseitige Schirmeinrichtung 32 auf, welche aufgrund der reduzierten Penumbra der MeV-Röntgenstrahlung X eine geringere Breite aufweist.

Das Objekt O ist wesentlich breiter als die zumindest eine Detektorzeile breit ist. Das Objekt O wird daher für die Werkstoffprüfung durch den Untersuchungsraum zwischen dem Linearbeschleunigersystem 20 und dem Röntgendetektor 31 hindurchbewegt oder umgekehrt.

**Fig. 5** zeigt eine mobile Plattform 40 in einer Seitenansicht. Die mobile Plattform 40 weist ein Fahrgestell 41 und eine Durchleuchtungseinrichtung 30 auf. Das Linearbeschleunigersystem 20 ist auf dem Fahrgestell 41 angeordnet. Der Röntgendetektor 31 ist in einem Abstand größer 3 m vom Transmissionstarget 23 als Teil des Linearbeschleunigersystems 20 an einem Trägerarm 42 angeordnet. Der Röntgendetektor 31 ist an dem Fahrgestell 41 mittels des Trägerarms 42 befestigt. In einer vorteilhaften Weiterbildung ist die mobile Plattform 40 als Lastkraftwagen ausgebildet.

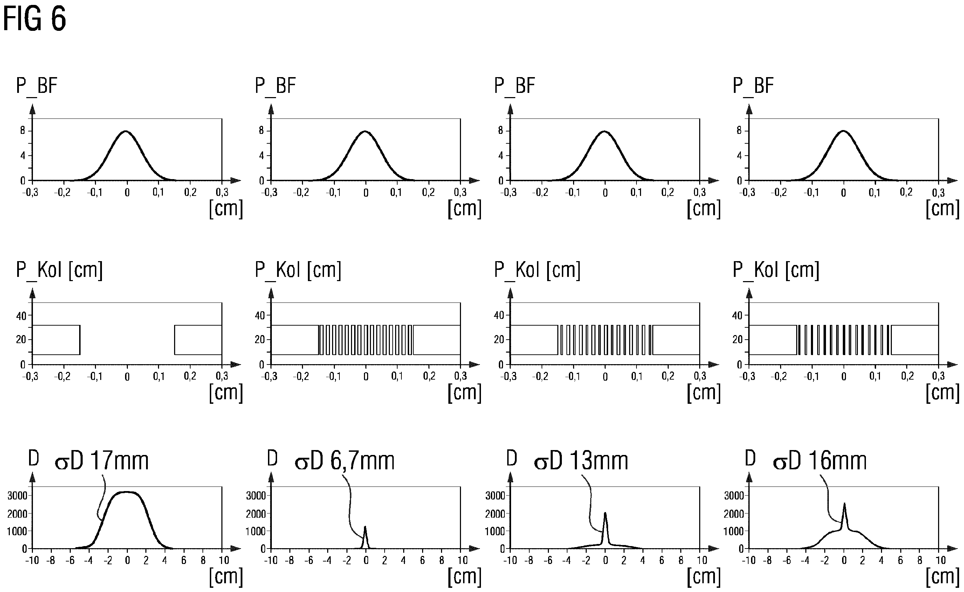

**Fig. 6** bis **Fig. 11** zeigen Simulationen der Abhängigkeiten verschiedener Parameter des Vielfachkollimators 25 im Linearbeschleunigersystem 20. Je Figur werden die im Folgenden beschriebenen Parameter verändert. Die Kollimatorbreite des Vielfachkollimators 25 beträgt in diesen Figuren 3 mm, kann allerdings zwischen 0,1 und 20 mm, insbesondere zwischen 1 und 10 mm betragen.

Die erste Zeile zeigt das Profil P_BF des Brennflecks im Transmissionstarget 23. Die zweite Zeile zeigt das Profil P Kol des Kollimators, insbesondere die Kollimatortiefe, die Kollimatorbreite und gegebenenfalls den Mittelpunktabstand zwischen den röntgenstrahlenabsorbierenden Schichten 25.1 ... 25.N und die Dicke der röntgenstrahlenabsorbierenden Schichten 25.1 ... 25.N. Die dritte Zeile zeigt ein Histogramm der Dosisverteilung D der MeV-Röntgenstrahlung X und als einzelnen Wert die dazugehörige Standardabweichung σD.

Die erste Spalte dieser Figuren enthält die simulierten Werte des herkömmlichen Linearbeschleunigersystems 10 ohne Vielfachkollimator 25. Die weiteren Spalten enthalten simulierte Werte, bei denen der jeweils benannte Parameter des Vielfachkollimators 25 verändert wird.

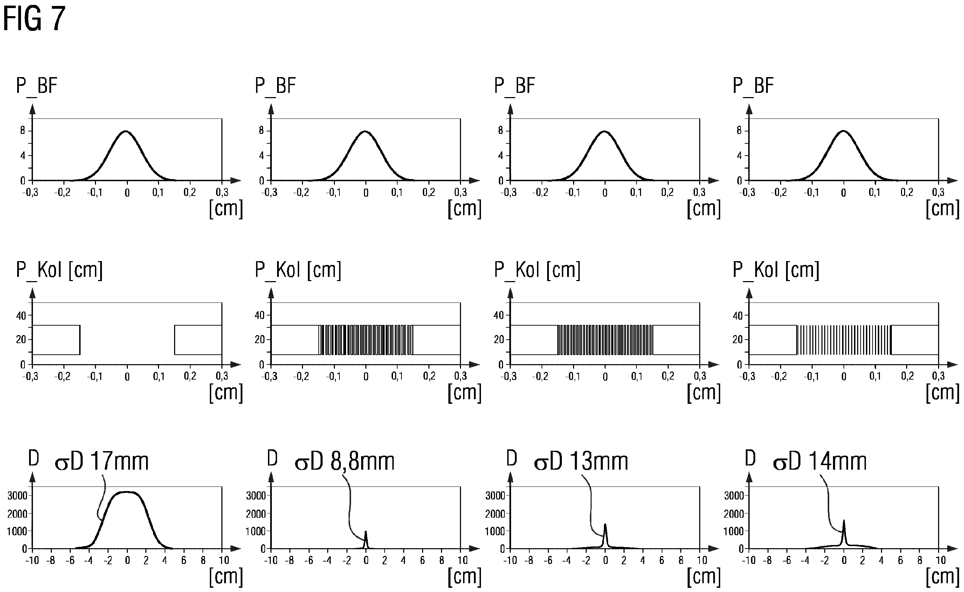

Die Spalten 2 bis 4 der **Figuren 6** und **7** zeigen die Abhängigkeit der Dosisverteilung D von dem Mittelpunktabstand und der Dicke. Der Mittelpunktabstand zwischen den röntgenstrahlenabsorbierenden Schichten 25.1 ... 25.N beträgt zwischen 0,01 und 1 mm, insbesondere 0,1 mm. Grundsätzlich ist es denkbar, dass der Mittelpunktabstand zwischen den röntgenstrahlenabsorbierenden Schichten 25.1 ... 25.N variiert. Die Dicke der röntgenstrahlenabsorbierenden Schichten 25.1 ... 25.N beträgt zwischen 0,01 und 0,5 mm, insbesondere 0,025 mm. Grundsätzlich ist es denkbar, dass die Dicke der röntgenstrahlenabsorbierenden Schichten 25.1 ... 25.N variiert. Das Verhältnis aus dem Mittelpunktabstand zwischen den röntgenstrahlenabsorbierenden Schichten 25.1 ... 25.N über der Dicke der röntgenstrahlenabsorbierenden Schichten 25.1 ... 25.N beträgt zwischen 0,1 und 50, insbesondere zwischen 1 und 20, vorzugsweise 4.

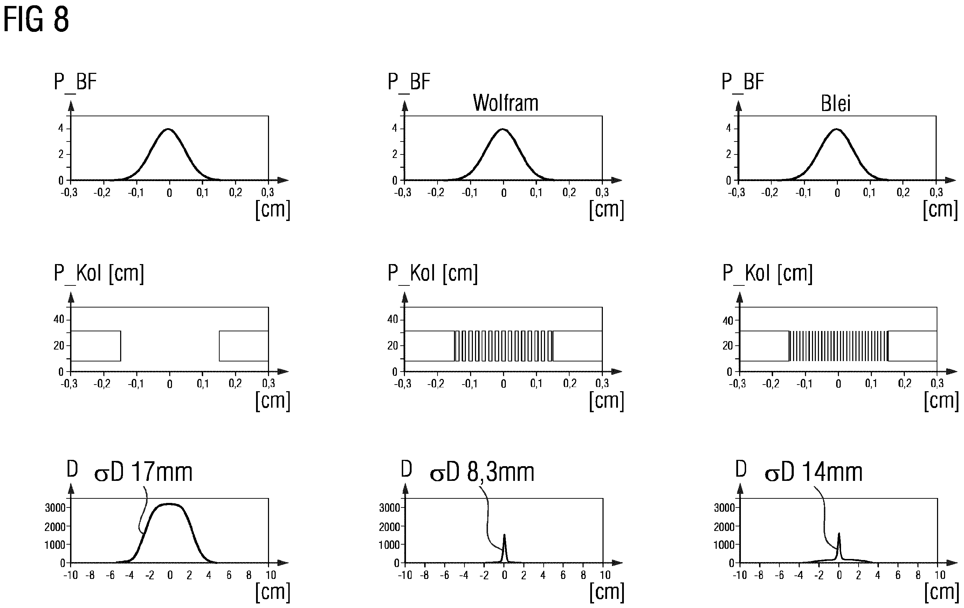

**Fig. 8** enthält eine Gegenüberstellung der röntgenstrahlenabsorbierenden Materialien Wolfram (Spalte 2) und Blei (Spalte 3) beim Vielfachkollimator 25.

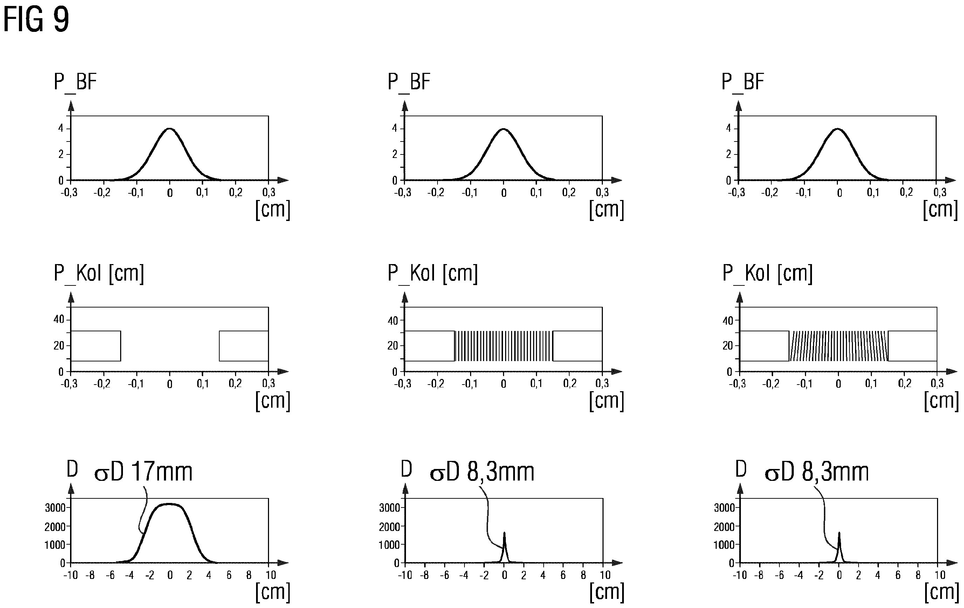

**Fig. 9** zeigt einen simulierten Wolfram-basierten Vielfachkollimator 25 einmal mit vollständig parallel ausgerichteten röntgenstrahlenabsorbierenden Schichten 25.1 ... 25.N (Spalte 2) und das andere Mal zur Fokussierung der MeV-Röntgenstrahlung X konisch ausgerichtete röntgenstrahlenabsorbierende Schichten 25.1 ... 25.N (Spalte 3) .

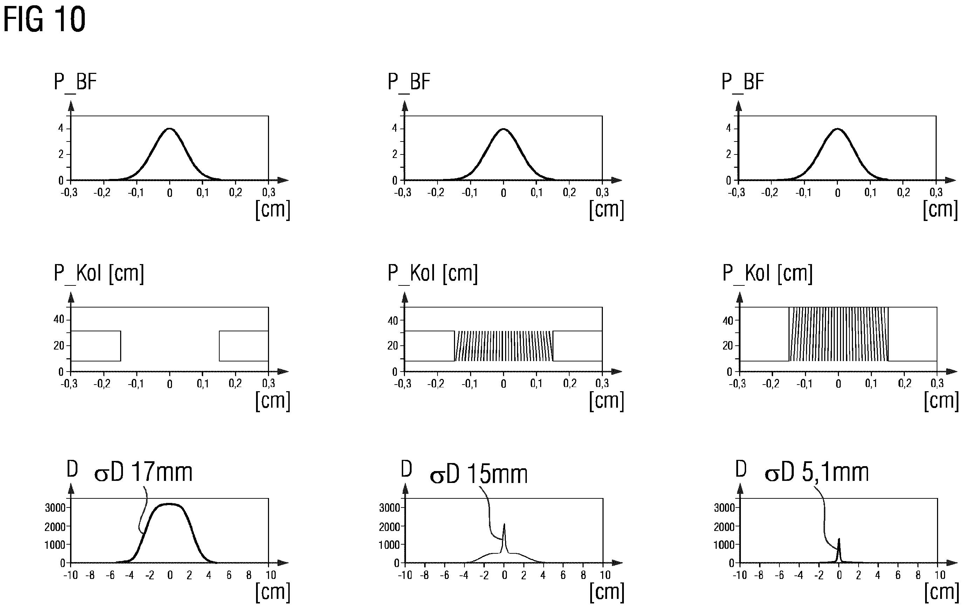

**Fig. 10** zeigt den Einfluss der Kollimatortiefe bei einer konischen Ausrichtung in der Variante "kurz" (Spalte 2) und in der Variante "lang" (Spalte 3). Die Kollimatortiefe des Vielfachkollimators 25 beträgt zwischen 1 und 100 cm, insbesondere zwischen 10 und 50 cm, vorzugsweise 25 cm.

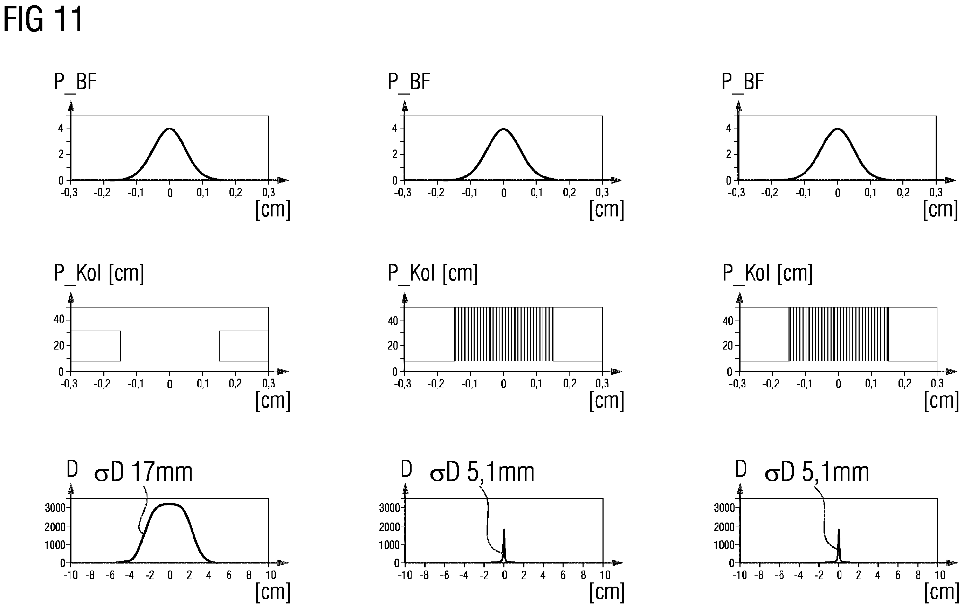

**Fig. 11** stellt der konisch ausgerichteten langen Variante (Spalte 3) die vollständig parallel ausgerichtete lange Variante (Spalte 2) gegenüber.

Obwohl die Erfindung im Detail durch die bevorzugten Ausführungsbeispiele näher illustriert und beschrieben wurde, so ist die Erfindung dennoch nicht durch die offenbarten Beispiele eingeschränkt und andere Variationen können vom Fachmann hieraus abgeleitet werden, ohne den Schutzumfang der Erfindung zu verlassen.

## Patentansprüche

1. Linearbeschleunigersystem (20) für ein Erzeugen einer MeV-Röntgenstrahlung (X) zur Werkstoffprüfung eines Objekts (O), aufweisend
- eine Elektronenquelle (21) zur Emission von Elektronen,
- eine Beschleunigervorrichtung (22), welche die Elektronenquelle (21) umgibt und stirnseitig ein Transmissionstarget (23) zur Generierung der MeV-Röntgenstrahlung (X) aufweist, und
- eine Hochfrequenzquelle (24) zur Beschleunigung der Elektronen auf eine kinetische Energie im MeV-Bereich innerhalb der Beschleunigervorrichtung (22) in Richtung des Transmissionstargets (23),
**gekennzeichnet durch**
- einen stirnseitig vor dem Objekt (O) angeordneten Vielfachkollimator (25) zur Kollimierung der generierten MeV-Röntgenstrahlung (X), welcher mehrere röntgenstrahlenabsorbierende Schichten (25.1 ... 25.N) aufweist, die zueinander röntgenstrahlendurchlässig beabstandet und im Wesentlichen parallel zur Propagationsrichtung der MeV-Röntgenstrahlung (X) ausgerichtet sind.

2. Linearbeschleunigersystem (20) nach Anspruch 1, wobei der Vielfachkollimator (25) zusätzlich mehrere röntgenstrahlentransparente Schichten aufweist, welche im Vielfachkollimator zwischen den röntgenstrahlenabsorbierenden Schichten (25.1 ... 25.N) derart angeordnet sind, dass sich die röntgenstrahlentransparenten Schichten und die röntgenstrahlenabsorbierenden Schichten (25.1 ... 25.N) abwechseln.

3. Linearbeschleunigersystem (20) nach Anspruch 2, wobei die röntgenstrahlentransparenten Schichten als röntgenstrahlentransparentes Material Kunststoff und/oder Silizium und/oder Aluminium aufweisen.

4. Linearbeschleunigersystem (20) nach einem der vorhergehenden Ansprüche, wobei die röntgenstrahlenabsorbierenden Schichten (25.1 ... 25.N) als röntgenstrahlenabsorbierendes Material Wolfram und/oder Blei aufweisen.

5. Linearbeschleunigersystem (20) nach einem der vorhergehenden Ansprüche, wobei eine Kollimatorbreite des Vielfachkollimators (25) zwischen 0,1 und 20 mm, insbesondere zwischen 1 und 10 mm, vorzugsweise 3 mm beträgt.

6. Linearbeschleunigersystem (20) nach einem der vorhergehenden Ansprüche, wobei eine Kollimatortiefe des Vielfachkollimators (25) zwischen 1 und 100 cm, insbesondere zwischen 10 und 50 cm, vorzugsweise 25 cm beträgt.

7. Linearbeschleunigersystem (20) nach einem der vorhergehenden Ansprüche, wobei ein Mittelpunktabstand zwischen den röntgenstrahlenabsorbierenden Schichten (25.1 ... 25.N) zwischen 0,01 und 1 mm, insbesondere 0,1 mm beträgt.

8. Linearbeschleunigersystem (20) nach einem der vorhergehenden Ansprüche, wobei eine Dicke der röntgenstrahlenabsorbierenden Schichten (25.1 ... 25.N) zwischen 0,01 und 0,5 mm, insbesondere 0,025 mm beträgt.

9. Linearbeschleunigersystem (20) nach einem der vorhergehenden Ansprüche, wobei ein Verhältnis aus dem Mittelpunktabstand zwischen den röntgenstrahlenabsorbierenden Schichten (25.1 ... 25.N) über der Dicke der röntgenstrahlenabsorbierenden Schichten (25.1 ... 25.N) zwischen 0,1 und 50, insbesondere zwischen 1 und 20, vorzugsweise 4 beträgt.

10. Linearbeschleunigersystem (20) nach einem der vorhergehenden Ansprüche, wobei die Dicke der röntgenstrahlenabsorbierenden Schichten (25.1 ... 25.N) variiert.

11. Linearbeschleunigersystem (20) nach einem der vorhergehenden Ansprüche, wobei ein Mittelpunktabstand zwischen den röntgenstrahlenabsorbierenden Schichten (25.1 ... 25.N) variiert.

12. Linearbeschleunigersystem (20) nach einem der vorhergehenden Ansprüche, wobei die röntgenstrahlenabsorbierenden Schichten (25.1 ... 25.N) zur Fokussierung der MeV-Röntgenstrahlung (X) konisch ausgerichtet sind.

13. Durchleuchtungseinrichtung (30), aufweisend
- ein Linearbeschleunigersystem (20) nach einem der vorhergehenden Ansprüche und
- einen Röntgendetektor (31), welcher zumindest eine Detektorzeile mit einer Länge größer 1 m aufweist.

14. Mobile Plattform (40), aufweisend
- ein Fahrgestell (41) und
- eine Durchleuchtungseinrichtung (30) nach Anspruch 13, wobei das Linearbeschleunigersystem (20) auf dem Fahrgestell (41) angeordnet ist und der Röntgendetektor (31) in einem Abstand größer 3 m vom Transmissionstarget (23) an einem Trägerarm (42) angeordnet und an dem Fahrgestell (41) mittels des Trägerarms (42) befestigt ist.

15. Mobile Plattform (40) nach Anspruch 14, welche als Lastkraftwagen ausgebildet ist.
